# EUROPÄISCHE PATENTSCHRIFT

(11) **EP 3 311 046 B1**
(45) Veröffentlichungstag und Bekanntmachung des Hinweises auf die Patenterteilung: **01.01.2025**
(21) Anmeldenummer: 16711810.8
(22) Anmeldetag: 22.03.2016
(51) Int. Cl.: F16J 15/34, F16J 15/36

(54) **GLEITRINGDICHTUNGSANORDNUNG MIT AUSRÜCKSICHERUNG**
SLIDE RING SEAL ARRANGEMENT COMPRISING RELEASE PROTECTION
SYSTÈME D'ÉTANCHÉITÉ À ANNEAUX GLISSANTS POURVU D'UN DISPOSITIF DE PROTECTION CONTRE LE DÉBOÎTEMENT

(30) Priorität: 18.06.2015 DE 102015211223
(43) Veröffentlichungstag der Anmeldung: 25.04.2018
(73) Patentinhaber: EagleBurgmann Germany GmbH & Co. KG, 82515 Wolfratshausen (DE)
(72) Erfinder: PEHL, Andreas, 85586 Poing (DE); SKRZIDLO, Joachim, 82515 Wolfratshausen (DE); SCHULTEN, Berthold, 82538 Geretsried (DE)
(74) Vertreter: Hoefer & Partner Patentanwälte mbB
(86) Internationale Anmeldenummer: PCT/EP2016/056222
(87) Internationale Veröffentlichungsnummer: WO 2016/202475

(56) Entgegenhaltungen:
- EP-A1- 0 035 092
- US-A- 3 356 378

## Beschreibung

Die vorliegende Erfindung betrifft eine Gleitringdichtungsanordnung mit einer Ausrücksicherung für den rotierenden Gleitring, insbesondere bei Verwendung mit verschmutzten Medien.

Gleitringdichtungsanordnungen sind aus dem Stand der Technik in unterschiedlichen Ausgestaltungen bekannt. Um ein Ausrücken eines Gleitrings zu vermeiden, werden diese üblicherweise auf eine Hülse oder dgl. aufgeschrumpft. Dadurch wird eine kraftschlüssige Verbindung zwischen dem Gleitring und der Hülse erreicht, welche ein axiales Bewegen und Ausrücken des Gleitrings in Axialrichtung verhindert. Insbesondere bei einer Abdichtung von verschmutzten Medien, z.B. Erdöl, werden gerne Gleitringe mit Diamantbeschichtung verwendet. Aufgrund der Beschichtung kann ein derartiger Gleitring jedoch nicht auf eine Hülse oder dgl. aufgeschrumpft werden. Diamantbeschichtete Gleitringe bieten bei verschmutzten Medien insbesondere den Vorteil einer höheren Lebensdauer. Derartige Gleitringe müssen daher lose, d.h., in Axialrichtung der Gleitringdichtungsanordnung beweglich, angeordnet werden. Aufgrund der Verwendung bei verschmutzten Medien ist es jedoch möglich, dass Schmutzpartikel aus dem Medium in einen Spalt am rotierenden Gleitring gelangen können und zu einem Versatz bzw. einer Verwerfung an der Gleitfläche führen können. Weiterhin zeigt die EP 0 035 092 A1 eine Gleitringdichtungsanordnung gemäß dem Oberbegriff des Anspruchs 1. Aus der US 3,356,378 B ist eine Gleitringdichtung bekannt, welche ein Verdrehen der Gleitringe in Umfangsrichtung verhindern kann.

Es ist daher Aufgabe der vorliegenden Erfindung, eine Gleitringdichtungsanordnung bereitzustellen, welche bei einfachem Aufbau und einfacher, kostengünstiger Herstellbarkeit einen lose eingelegten Gleitring aufweist, welcher, ein sicheres Nachsetzen in Axialrichtung ermöglicht und problemlos bei verschmutzten Medien verwendet werden kann.

Diese Aufgabe wird durch eine Gleitringdichtungsanordnung mit den Merkmalen des Anspruchs 1 gelöst, die Unteransprüche zeigen bevorzugte Weiterbildungen der Erfindung.

Die erfindungsgemäße Gleitringdichtungsanordnung mit den Merkmalen des Anspruchs 1 weist einen rotierenden und einen stationären Gleitring auf, welcher zwischen sich einen Dichtspalt begrenzen. Weiterhin ist ein Balgelement vorgesehen, welches ein Nachsetzen des rotierenden Gleitrings in Axialrichtung der Gleitringdichtung ermöglicht. Eine Ausrücksicherung verhindert ein axiales Ausrücken des rotierenden Gleitrings. Die Ausrücksicherung umfasst eine Innenhülse mit einem radial nach außen gerichteten Steg. Am Gleitring ist ein radial nach innen gerichteter Absatz mit einer Kontaktfläche vorgesehen. Der rotierende Gleitring ist dabei in Axialrichtung frei bewegbar und lose auf der Innenhülse angeordnet. Dadurch ist ein Aufschrumpfen des rotierenden Gleitrings nicht mehr notwendig. Die Ausrücksicherung verhindert ein unerwünschtes Ausrücken des rotierenden Gleitrings bei einem axialen Nachsetzen des Gleitrings. Da kein Schrumpfprozess zur Fixierung des rotierenden Gleitrings notwendig ist, kann der rotierende Gleitring eine Diamantbeschichtung oder eine andere Beschichtung aufweisen. Weiterhin ist die Ausrücksicherung an einem Innenbereich der Gleitringdichtungsanordnung angeordnet, in welchem diese nicht mit dem verschmutzten Medium in Kontakt kommt. Dadurch kann eine hohe Betriebssicherheit der erfindungsgemäßen Gleitringdichtungsanordnung sichergestellt werden. An der Innenhülse steht somit ein sauberes Sperrmedium oder dgl. an, und ein Eindringen von Verunreinigungen zwischen Gleitring und Innenhülse ist ausgeschlossen. Dadurch treten auch im Betrieb keine Verwerfungen oder andersartige Beschädigungen des Gleitrings infolge des verschmutzten Mediums auf. Weiterhin kann eine zerstörungsfreie Demontage des rotierenden Gleitrings ermöglicht werden, da kein Aufschrumpfen oder dgl. an einer Hülse vorliegt.

Weiter ist eine Außenhülse vorgesehen, welche mit der Innenhülse verbunden ist. Hierdurch ist es möglich, eine Drehmomentübertragung von einem rotierenden Bauteil, z.B. einer Welle, über das Balgelement und die Außenhülse auf den rotierenden Gleitring zu übertragen. Zur Drehmomentübertragung zwischen Außenhülse und rotierendem Gleitring sind vorzugsweise ein oder mehrere Stifte, insbesondere Zylinderstifte, vorgesehen.

Weiter bevorzugt ist der nach außen gerichtete Steg der Innenhülse in direktem Kontakt mit der Kontaktfläche am rotierenden Gleitring. Dadurch kann ein sicheres Bewegen des rotierenden Gleitrings in Axialrichtung ermöglicht werden. Ferner verhindert der direkte Kontakt ein unerwünschtes Ausrücken des rotierenden Gleitrings.

Besonders bevorzugt ist die Kontaktfläche am rotierenden Gleitring senkrecht zur Axialrichtung ausgerichtet. Hierdurch kann ein einfacher Aufbau sichergestellt werden.

Gemäß einer weiteren bevorzugten Ausgestaltung der vorliegenden Erfindung umfasst die Gleitringdichtungsanordnung ein Federelement, welches zwischen dem Steg der Innenhülse und der Kontaktfläche des rotierenden Gleitrings angeordnet ist. Das Federelement stellt dabei in Axialrichtung eine Federkraft bereit und stellt eine spielfreie Verbindung zwischen der Innenhülse und dem rotierenden Gleitring bereit. Das Federelement ist vorzugsweise eine Wellfeder.

Weiter bevorzugt ist zwischen der Außenhülse und der Innenhülse eine Schweißverbindung vorgesehen.

Gemäß einer alternativen Ausgestaltung der vorliegenden Erfindung ist zwischen der Außenhülse und der Innenhülse eine Rastverbindung vorgesehen. Bevorzugt sind hierbei zwei Rastnasen an der Außenhülse ausgebildet, welche in entsprechende Ausnehmungen in der Innenhülse einrasten. Dadurch ist es möglich, dass die Außenhülse und die Innenhülse zerstörungsfrei voneinander getrennt werden können und auch der rotierende Gleitring zerstörungsfrei entnommen werden kann.

Für einen besonders kompakten Aufbau ist vorzugsweise das Balgelement fest mit der Außenhülse verbunden.

Gemäß einer weiteren bevorzugten Ausführungsform der vorliegenden Erfindung übergreift die Außenhülse den rotierenden Gleitring teilweise. Hierdurch kann ein Schutz des vom Dichtspalt abgewandten Endes des rotierenden Gleitrings gegenüber dem verschmutzten Medium erreicht werden. Besonders bevorzugt ist hierbei ein Nebendichtelement, insbesondere ein O-Ring, zwischen der Außenhülse und dem rotierenden Gleitring angeordnet. Das Nebendichtelement ist besonders bevorzugt in einer Nut in der Außenhülse angeordnet, wobei die Nut an einem inneren Umfangsbereich der Außenhülse, welcher zum rotierenden Gleitring gerichtet ist, gebildet ist.

Weiter bevorzugt ist zwischen der Außenhülse und dem rotierenden Gleitring eine Kontaktdichtung vorgesehen. Die Kontaktdichtung ist vorzugsweise an einem vom Dichtspalt abgewandten Ende des rotierenden Gleitrings und der Außenhülse vorgesehen.

Der rotierende Gleitring weist besonders bevorzugt eine Diamantbeschichtung auf. Dadurch ist es möglich, einen diamantbeschichteten, rotierenden Gleitring zu verwenden, welcher kraftfrei und insbesondere in Axialrichtung nachsetzbar in der Gleitringdichtungsanordnung angeordnet ist. Weiter ist eine zerstörungsfreie Demontage des rotierenden Gleitrings möglich. Hierdurch kann nur ein rotierender Gleitring ausgetauscht werden und restliche Bauteile der Gleitringdichtungsanordnung, insbesondere das Balgelement, können wiederverwendet werden.

Nachfolgend wird unter Bezugnahme auf die begleitende Zeichnung eine Gleitringdichtungsanordnung gemäß bevorzugten Ausführungsbeispielen der Erfindung im Detail beschrieben. In der Zeichnung sind gleiche bzw. funktional gleiche Teile mit den gleichen Bezugszeichen bezeichnet. In der Zeichnung ist:
- Fig. 1: eine schematische Schnittansicht einer Gleitringdichtungsanordnung gemäß einem ersten bevorzugten Ausführungsbeispiel der Erfindung,
- Fig. 2: eine schematische Schnittansicht einer Gleitringdichtungsanordnung gemäß einem zweiten bevorzugten Ausführungsbeispiel der Erfindung, und
- Fig. 3: eine vergrößerte Teilschnittdarstellung der in Fig. 2 gezeigten Ausrücksicherung.

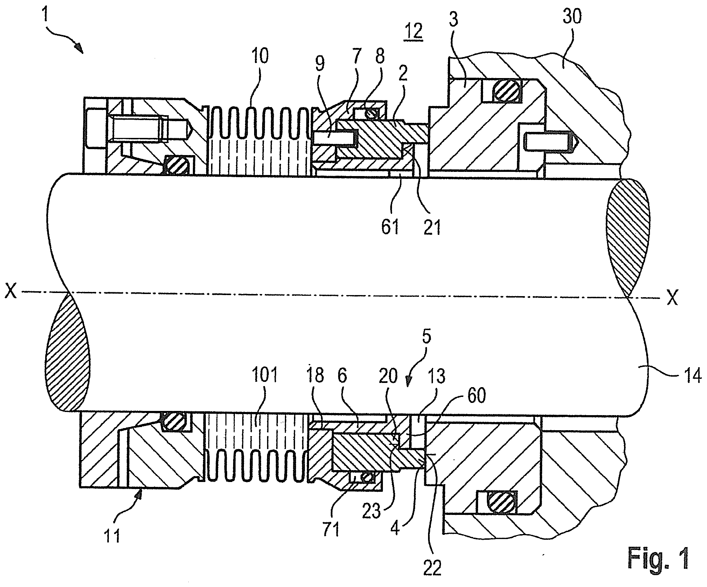

Nachfolgend wird unter Bezugnahme auf Fig. 1 eine Gleitringdichtungsanordnung 1 gemäß einem ersten Ausführungsbeispiel der Erfindung im Detail beschrieben.

Wie aus Fig. 1 ersichtlich ist, umfasst die Gleitringdichtungsanordnung 1 einen rotierenden Gleitring 2 und einen stationären Gleitring 3, welche zwischen sich einen Dichtspalt 4 definieren.

Der stationäre Gleitring 3 ist an einem stationären Bauteil 30, z.B. einem Gehäuse oder dgl., fixiert.

Die Gleitringdichtungsanordnung 1 ist dabei vorgesehen, an einem rotierenden Bauteil 14, z.B. einer Welle, einen Bereich 12, in welchem ein schmutziges Medium vorhanden ist, gegenüber einem Innenbereich 13 mit einem Dichtungsmedium, z.B. einem Sperrfluid, wie z.B. Öl oder dgl., abzudichten.

Um axiale Ausgleichsbewegungen mit dem rotierenden Bauteil 14 ausführen zu können, ist ferner ein Balgelement 10 vorgesehen, welches über eine mehrteilige Balgfixiereinheit 11 mit dem rotierenden Bauteil 14 fest verbunden ist (vgl. Fig. 1). Dadurch können Axialbewegungen der Welle durch das Balgelement 10 ausgeglichen werden. Das Balgelement 10 ist vorzugsweise aus Metall.

Um bei derartigen Axialbewegungen ein Ausrücken des rotierenden Gleitrings 2, insbesondere bei einer in Axialrichtung X-X hin- und hergehenden Bewegung, zu vermeiden, ist erfindungsgemäß eine Ausrücksicherung 5 vorgesehen.

Die Ausrücksicherung 5 umfasst eine Innenhülse 6 und eine Außenhülse 7.

Der rotierende Gleitring 2 ist dabei lose zwischen die Innenhülse 6 und die Außenhülse 7 eingelegt. Die Innenhülse 6 ist dabei an einem inneren Umfangsteilbereich des rotierenden Gleitrings 2 angeordnet und die Außenhülse 7 ist an einem äußeren Umfangsteilbereich des rotierenden Gleitrings 2 angeordnet. Die Außenhülse 7 übergreift dabei einen äußeren Mantelbereich des rotierenden Gleitrings 2.

Für eine Drehmomentmitnahme sind mehrere Zylinderstifte 9 vorgesehen, welche in entsprechend gebildete Ausnahmen im rotierenden Gleitring 2 eingeführt sind und an der Außenhülse 7 mit einer Presspassung fixiert sind. Dadurch kann eine Rotation des rotierenden Bauteils 14 über die mehrteilige Balgfixiereinheit 11 und das Balgelement 10 auf die Außenhülse 7 und von der Außenhülse 7 auf den rotierenden Gleitring 2 übertragen werden.

Eine Nebendichtung 8 in Form eines O-Rings ist ferner zwischen der Außenhülse 7 und dem rotierenden Gleitring 2 angeordnet. Hierzu ist in der Außenhülse 7 eine entsprechend gebildete Ausnehmung 71 vorgesehen.

Das Balgelement 10 ist fest mit der Außenhülse 7 verbunden, beispielsweise mittels einer Schweißverbindung.

Weiterhin sind die Außenhülse 7 und die Innenhülse 6 ebenfalls fest miteinander verbunden. Bevorzugt ist hierbei ebenfalls eine Schweißverbindung 18 vorgesehen.

Wie weiter aus Fig. 1 ersichtlich ist, ist an der Innenhülse 6 ein Steg 60 vorgesehen, welcher am zum Dichtspalt 4 gerichteten Ende der Innenhülse 6 angeordnet ist. Der Steg 60 ist ein ringförmig umlaufender Steg, welcher an einer Kontaktfläche 21 des rotierenden Gleitrings 2 anliegt. Die Kontaktfläche 21 ist an einem Absatz 20 des rotierenden Gleitrings 2 ausgebildet. Dadurch ergibt sich ein zur Axialrichtung X-X senkrechter Kontaktbereich 23 zwischen dem Steg 60 und der Kontaktfläche 21. Der Kontaktbereich 23 zwischen Steg 60 und Kontaktfläche 21 verläuft somit in radialer Richtung der Gleitringdichtungsanordnung. Weiterhin weist die Innenhülse 6 mehrere Öffnungen 61 an einem inneren Umfangsbereich auf, um Dichtmedium aus dem Innenbereich 13 zum inneren Bereich 101 des Balgelements 10 zuzuführen.

Im Unterschied zum Stand der Technik, bei welchem der rotierende Gleitring 2 mittels einer Schrumpfverbindung fest an einer Hülse fixiert ist, ist bei der vorliegenden Erfindung der rotierende Gleitring 2 kraftfrei zwischen der Innenhülse 6 und der Außenhülse 7 angeordnet. Der rotierende Gleitring 2 wird somit vor einer Montage lose auf die Innenhülse 6 eingelegt und anschließend wird die Außenhülse 7 mit der Innenhülse 6, z.B. über die Schweißverbindung 18, fest miteinander verbunden. Durch das Vorsehen des Steges 60 an der Innenhülse 6 ist somit jedoch ein Ausrücken des rotierenden Gleitrings 2 aus dem Verbund zwischen Innenhülse 6 und Außenhülse 7 verhindert. Somit ist es insbesondere möglich, dass an einer Gleitfläche 22 des rotierenden Gleitrings 2 eine Beschichtung, insbesondere eine Diamantbeschichtung, vorgesehen werden kann.

Da die Ausrücksicherung 5 im Wesentlichen an einem inneren Umfang des rotierenden Gleitrings 2 angeordnet ist, kann die Gleitringdichtungsanordnung 1 insbesondere auch bei verschmutzten Medien, z.B. bei rotierenden Bauteilen bei der Erdölförderung, verwendet werden. Insbesondere kann dabei verhindert werden, dass Partikel aus dem zu fördernden Medium aus dem Bereich 12 an dem Kontaktbereich 23 zwischen dem Steg 60 und der Kontaktfläche 21 gelangen können und dort zu Fehlstellungen des rotierenden Gleitrings 2 aus seiner in Axialrichtung X-X ausgerichteten Position führen können. Derartige Fehlstellungen könnten zu einem unerwünschten Verschleiß bzw. einem Kontakt zwischen dem rotierenden Gleitring 2 und dem stationären Gleitring 3 im Bereich des Dichtspalts 4 führen. Weiterhin ist es möglich, dass der rotierende Gleitring 2 zerstörungsfrei demontiert und ausgetauscht werden kann. Hierzu muss zwar die fixe Verbindung zwischen der Innenhülse 6 und der Außenhülse 7 entfernt werden, jedoch kann der lose eingelegte Gleitring einfach entnommen werden und ein neuer rotierender Gleitring 2 kann spannungsfrei an der Ausrücksicherung 5 angeordnet werden.

Weiterhin kann durch das Vorsehen des Kontaktbereichs 23 zwischen dem Steg 60 und der Kontaktfläche 21 senkrecht zur Axialrichtung X-X ein Verklemmen der Bauteile verhindert werden.

Darüber hinaus kann die erfindungsgemäße Gleitringdichtungsanordnung auch für Prozesse mit Druckumkehr verwendet werden.

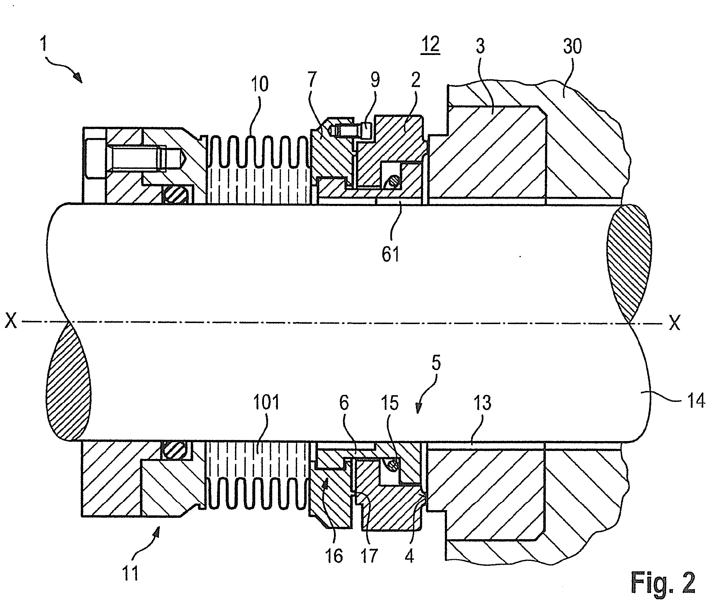

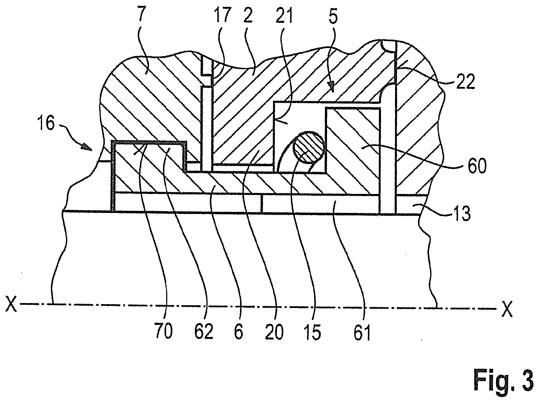

Die Fig. 2 und 3 zeigen eine Gleitringdichtungsanordnung 1 gemäß einem zweiten Ausführungsbeispiel der Erfindung.

Im Unterschied zum ersten Ausführungsbeispiel ist beim zweiten Ausführungsbeispiel eine Ausrücksicherung 5 vorgesehen, bei der eine zerstörungsfreie, lösbare Verbindung zwischen der Innenhülse 6 und der Außenhülse 7 vorgesehen ist.

In diesem Ausführungsbeispiel ist zwischen der Innenhülse 6 und der Außenhülse 7 eine Rastverbindung 16 vorgesehen. Hierbei umfasst die Innenhülse 6 Rastnasen 62, welche in entsprechend in komplementärer Form gebildeten Rastausnehmungen 70 in der Außenhülse 7 eingerastet sind. Dies ist im Detail aus Fig. 3 ersichtlich. Die Rastverbindung 16 ist somit an dem vom Dichtspalt 4 abgewandten Ende der Innenhülse 6 ausgebildet. Vorzugsweise ist dabei eine umlaufende Rastnase 62 und entsprechend eine umlaufende Rastausnehmung 70 vorgesehen.

Weiterhin ist im Unterschied zum ersten Ausführungsbeispiel eine Wellfeder 15 zwischen dem Steg 60 und der Kontaktfläche 21 des rotierenden Gleitrings 2 vorgesehen. Die Wellfeder übt dabei eine Kraft in Axialrichtung X-X aus. Die Wellfeder 15 ist in Umfangsrichtung gewellt und legt sich abwechselnd an den Steg 60 und die Kontaktfläche 21 an. Somit ist die von der Wellfeder 15 aufgebrachte Axialkraft in Umfangsrichtung im Wesentlichen gleich verteilt.

Weiterhin ist statt der im ersten Ausführungsbeispiel verwendeten Elastomerdichtung in Form der Nebendichtung 8 beim zweiten Ausführungsbeispiel eine Kontaktdichtung 17 zwischen der Außenhülse 7 und dem rotierenden Gleitring 2 vorgesehen. Dadurch ist es insbesondere möglich, dass die Gleitringdichtung 1 des zweiten Ausführungsbeispiels in Radialrichtung, d.h., senkrecht zur Axialrichtung X-X, sehr kleinbauend sein kann.

### Bezugszeichenliste

- 1: Gleitringdichtungsanordnung
- 2: rotierender Gleitring
- 3: stationärer Gleitring
- 4: Dichtspalt
- 5: Ausrücksicherung
- 6: Innenhülse
- 7: Außenhülse
- 8: Nebendichtung
- 9: Zylinderstift
- 10: Balgelement
- 11: Balgfixiereinheit
- 12: Bereich
- 13: Innenbereich
- 14: rotierendes Bauteil
- 15: Federelement, Wellfeder
- 16: Rastverbindung
- 17: Kontaktdichtung
- 18: Schweißverbindung
- 20: Absatz
- 21: Kontaktfläche
- 22: Gleitfläche
- 23: Kontaktbereich
- 30: Gehäuse
- 60: Steg
- 61: Öffnung in Axialrichtung
- 62: Rastnase
- 70: Rastausnehmung
- 71: Ausnehmung
- 101: innerer Bereich
- X-X: Axialrichtung

## Patentansprüche

1. Gleitringdichtungsanordnung, umfassend:
- einen rotierenden Gleitring (2) und einen stationären Gleitring (3), welche zwischen sich einen Dichtspalt (4) begrenzen,
- wobei der rotierende Gleitring (2) einen radial nach innen gerichteten Absatz (20) mit einer Kontaktfläche (21) aufweist, und
- ein Balgelement (10) für ein Nachsetzen des rotierenden Gleitrings (2) in einer Axialrichtung (X-X) der Gleitringdichtungsanordnung,
- eine Ausrücksicherung (5) für den rotierenden Gleitring (2),
- wobei die Ausrücksicherung (5) eine Innenhülse (6) mit einem radial nach außen gerichteten Steg (60) umfasst, welcher eine Bewegung des rotierenden Gleitrings (2) in Axialrichtung (X-X) begrenzt, und
- wobei der rotierende Gleitring (2) in Axialrichtung (X-X) frei bewegbar auf der Innenhülse (6) angeordnet ist, und
- ferner umfassend eine Außenhülse (7), welche mit der Innenhülse (6) verbunden ist,
**dadurch gekennzeichnet dass**
der rotierende Gleitring (2) lose zwischen Innenhülse (6) und Außenhülse (7) eingelegt ist.

2. Anordnung nach Anspruch 1, wobei der nach außen gerichtete Steg (60) in direktem Kontakt mit der Kontaktfläche (21) des rotierenden Gleitrings (2) ist.

3. Anordnung nach Anspruch 1, wobei ein Federelement (15) zwischen dem Steg (60) und der Kontaktfläche (21) des rotierenden Gleitrings (2) angeordnet ist.

4. Anordnung nach einem der vorhergehenden Ansprüche, wobei die Kontaktfläche (21) senkrecht zur Axialrichtung (X-X) ausgerichtet ist.

5. Anordnung nach einem der vorhergehenden Ansprüche, wobei eine Verbindung zwischen der Außenhülse (7) und der Innenhülse (6) als Schweißverbindung (18) vorgesehen ist.

6. Anordnung nach einem der vorhergehenden Ansprüche, wobei eine Verbindung zwischen der Außenhülse (7) und der Innenhülse (6) als Rastverbindung (16) ausgebildet ist.

7. Anordnung nach einem der vorhergehenden Ansprüche, ferner umfassend einen Stift (9) zur Übertragung eines Drehmoments von der Außenhülse (7) auf den rotierenden Gleitring (2).

8. Anordnung nach einem der vorhergehenden Ansprüche, wobei das Balgelement (10) fest mit der Außenhülse (7) verbunden ist.

9. Anordnung nach einem der vorhergehenden Ansprüche, wobei eine Kontaktdichtung (17) zwischen der Außenhülse (7) und dem rotierenden Gleitring (2) vorgesehen ist.

10. Anordnung nach einem der vorhergehenden Ansprüche, wobei eine Gleitfläche (22) des rotierenden Gleitrings (2) eine Diamantbeschichtung aufweist.

## Claims

1. Mechanical seal arrangement, comprising:
- a rotating slide ring (2) and a stationary slide ring (3), which delimit a sealing gap (4) in between them,
- wherein the rotating slide ring (2) has a radially inward facing ledge (20) with a contact surface (21),
- a bellows element (10) for refitting the rotating slide ring (2) in an axial direction (X-X) of the mechanical seal arrangement, and
- a release protection device (5) for the rotating slide ring (2),
- wherein the release protection device (5) comprises an inner sleeve (6) with a radially outward facing web (60), which restricts a movement of the rotating slide ring (2) in the axial direction (X-X), and
- wherein the rotating slide ring (2) is arranged on the inner sleeve (6) so as to be freely movable in the axial direction (X-X)
- further comprising an outer sleeve (7) that is connected to the inner sleeve (6),
- **characterized in that** the rotating slide ring (2) is inserted loosely between the inner sleeve (6) and the outer sleeve (7).

2. Arrangement according to claim 1, wherein the outward facing web (60) is in direct contact with the contact surface (21) of the rotating slide ring (2).

3. Arrangement according to claim 1, wherein a spring element (15) is arranged between the web (60) and the contact surface (21) of the rotating slide ring (2).

4. Arrangement according to one of the preceding claims, wherein the contact surface (21) is aligned to be perpendicular to the axial direction (X-X).

5. Arrangement according to one of the preceding claims, wherein a connection between the outer sleeve (7) and the inner sleeve (6) is provided as a welded connection (18).

6. Arrangement according to one of the preceding claims, wherein a connection between the outer sleeve (7) and the inner sleeve (6) is embodied as a snap-in connection (16).

7. Arrangement according to one of the preceding claims, further comprising a pin (9) for transferring a torque from the outer sleeve (7) to the rotating slide ring (2).

8. Arrangement according to one of the preceding claims, wherein the bellows element (10) is fixedly connected to the outer sleeve (7).

9. Arrangement according to one of the preceding claims, wherein a contact seal (17) is provided between the outer sleeve (7) and the rotating slide ring (2).

10. Arrangement according to one of the preceding claims, wherein a slide surface (22) of the rotating slide ring (2) has a diamond coating.

## Revendications

1. Ensemble joint d'étanchéité à bagues de glissement comprenant :
- une bague de glissement rotative (2) et une bague de glissement stationnaire (3) qui délimitent entre elles une fente d'étanchéité (4),
- dans lequel la bague de glissement rotative (2) présente un épaulement (20) dirigé radialement vers l'intérieur avec une surface de contact (21) et
- un élément de soufflet (10) pour un repositionnement de la bague de glissement rotative (2) dans un sens axial (X-X) de l'ensemble joint d'étanchéité à bagues de glissement,
- un dispositif de protection contre le déboîtement (5) pour la bague de glissement rotative (2),
- dans lequel le dispositif de protection contre le déboîtement (5) comprend une douille intérieure (6) avec une nervure (60) dirigée radialement vers l'extérieur qui délimite un mouvement de la bague de glissement rotative (2) dans le sens axial (X-X) et
- dans lequel la bague de glissement rotative (2) est agencée de manière librement mobile dans le sens axial (X-X) sur la douille intérieure (6) et
- comprenant de plus une douille extérieure (7) qui est reliée à la douille intérieure (6),
**caractérisé en ce que**
la bague de glissement rotative (2) est insérée de manière lâche entre la douille intérieure (6) et la douille extérieure (7).

2. Ensemble selon la revendication 1, dans lequel la nervure (60) dirigée vers l'extérieur est en contact direct avec la surface de contact (21) de la bague de glissement rotative (2).

3. Ensemble selon la revendication 1, dans lequel un élément de ressort (15) est agencé entre la nervure (60) et la surface de contact (21) de la bague de glissement rotative (2).

4. Ensemble selon l'une quelconque des revendications précédentes, dans lequel la surface de contact (21) est orientée perpendiculairement au sens axial (X-X).

5. Ensemble selon l'une quelconque des revendications précédentes, dans lequel une liaison entre la douille extérieure (7) et la douille intérieure (6) est prévue en tant que liaison soudée (18).

6. Ensemble selon l'une quelconque des revendications précédentes, dans lequel une liaison entre la douille extérieure (7) et la douille intérieure (6) est réalisée en tant que liaison d'encliquetage (16).

7. Ensemble selon l'une quelconque des revendications précédentes, comprenant de plus une tige (9) pour la transmission d'un couple de la douille extérieure (7) à la bague de glissement rotative (2).

8. Ensemble selon l'une quelconque des revendications précédentes, dans lequel l'élément de soufflet (10) est fixement relié à la douille extérieure (7).

9. Ensemble selon l'une quelconque des revendications précédentes, dans lequel un joint d'étanchéité de contact (17) est prévu entre la douille extérieure (7) et la bague de glissement rotative (2).

10. Ensemble selon l'une quelconque des revendications précédentes, dans lequel une surface de glissement (22) de la bague de glissement rotative (2) présente un revêtement diamanté.
